# EUROPÄISCHE PATENTSCHRIFT

(11) **EP 1 581 362 B1**
(45) Veröffentlichungstag und Bekanntmachung des Hinweises auf die Patenterteilung: **16.08.2006**
(21) Anmeldenummer: 03775370.4
(22) Anmeldetag: 19.11.2003
(51) Int. Cl.: B23P 19/00, B23P 19/06, B21J 15/32

(54) **VORRICHTUNG UND VERFAHREN ZUM ZUFÜHREN EINES BOLZENFÖRMIGEN ELEMENTS ZU EINER VERARBEITUNGSEINHEIT**
DEVICE AND METHOD FOR FEEDING A BOLT-SHAPED ELEMENT TO A PROCESSING UNIT
PROCÉDÉ ET DISPOSITIF POUR ACHEMINER UN ÉLÉMENT EN FORME DE VIS À UNE UNITÉ DE TRAITEMENT

(30) Priorität: 10.01.2003 DE 10300878
(43) Veröffentlichungstag der Anmeldung: 05.10.2005
(73) Patentinhaber: Richard Bergner Verbindungstechnik GmbH & Co KG, 91126 Schwabach (DE)
(72) Erfinder: WEBER, Gotthard, 93057 Regensburg (DE)
(74) Vertreter: Dörr, Matthias
(86) Internationale Anmeldenummer: PCT/EP2003/012937
(87) Internationale Veröffentlichungsnummer: WO 2004/062845

(56) Entgegenhaltungen:
- EP-A- 0 587 916
- WO-A-94/03306
- DE-A- 3 937 903
- DE-A- 10 208 935
- GB-A- 2 152 862
- US-A- 4 609 134

## Beschreibung

Die Erfindung betrifft eine Vorrichtung zum Zuführen eines bolzenförmigen Elements mit einem Kopf und einem Schaft zu einer Verarbeitungseinheit, insbesondere zum Zuführen einer Schraube zu einem Setzkopf einer Presse, gemäß dem Oberbegriff des Anspruchs 1. Die Erfindung betrifft weiterhin ein Verfahren nach dem Oberbegriff des Anspruchs 8. Eine solche Vorrichtung, sowie ein solches Verfahren sind aus dem Dokument WO-A-94/03 306, das der Patentschrift EP 077/245 B entspricht, bekannt.

Befestigungselemente, wie z.B. Schrauben, werden häufig maschinell einer Verarbeitungsmaschine oder einer Verarbeitungseinheit in einer Bearbeitungsmaschine zugeführt. Aus der DE 30 04 549 C2 ist z.B. eine Vorschubeinrichtung zum diskontinuierlichen, schrittweisen Zuführen von einem oder mehreren länglichen Werkstücken auf einem vorgegebenen Weg an eine oder mehrere Verarbeitungsmaschinen, z. B. Abschermaschinen, Stanz-, Stoß-, Präge-, Press- oder Stempelmaschinen, Bohrmaschinen und/oder Schweißmaschinen, bekannt. Das Werkstück wird der Verarbeitungsmaschine hierbei in dessen Längsrichtung zugeführt. Die Vorrichtung ist daher nicht für eine Verarbeitungsmaschine, z. B. eine Presse, geeignet, die für eine Querzuführung eines Werkstücks, z. B. einer Schraube oder eines Bolzens, konstruiert ist.

Eine Vorrichtung zum Zuführen bolzenförmiger Elemente in deren Querrichtung zu einer Presse ist z.B. aus der EP 0 771 245 B1 bekannt. Hierbei wird ein bolzenförmiges Element in einer Ladebuchse aufgenommen, die in mehreren Richtungen verschiebbar ist. Die Vorrichtung ist damit sehr aufwändig aufgebaut. Durch die Förderung jedes einzelnen bolzenförmigen Elements mittels der in mehreren Achsen beweglichen Ladebuchse ist zudem die Förderleistung der Vorrichtung, d.h. die erreichbare Taktrate, eingeschränkt.

Der Erfindung liegt die Aufgabe zugrunde, ein Zuführen eines bolzenförmigen Elements, insbesondere einer Schraube, zu einer Bearbeitungseinheit mit wenig konstruktivem Aufwand und mit einer besonders hohen Taktrate zu ermöglichen.

Diese Aufgabe wird erfindungsgemäß gelöst durch eine Vorrichtung mit den Merkmalen des Anspruchs 1 sowie durch ein Verfahren mit den Merkmalen des Anspruchs 8. Hierzu weist die Vorrichtung einen sich in einer Schussrichtung, bezogen auf das Einschie-ßen des bolzenförmigen Elements in die Vorrichtung, verjüngenden Aufnahmetrichter auf, welcher aus einem Vorschubelement einerseits und mindestens einem, vorzugsweise zwei, Sperrelementen andererseits gebildet wird. Der Aufnahmetrichter befindet sich in einem Förderkanal, durch welchen das bolzenförmige Element zu einer Verarbeitungseinheit förderbar ist, und ist zur Aufnahme des bolzenförmigen Elements mit dem Schaft voran vorgesehen. Das bolzenförmige Element kann somit direkt, ohne "Einfädeln", in den bevorzugt als Führungsschiene ausgebildeten Förderkanal eingeschossen werden. Das Vorschubelement kann auf konstruktiv einfache Weise ohne Umlenkung der Bewegungsrichtung linear betätigt werden.

Im Sinne einer hohen erreichbaren Taktrate ist es von Vorteil, dass zur Aufnahme des bolzenförmigen Elements keinerlei innerhalb der Vorrichtung bewegbare Ladebuchse erforderlich ist. Das bolzenförmige Element wird daher unmittelbar mit dem Schaft voran in den im Förderkanal angeordneten Aufnahmetrichter eingeschossen. Der Begriff Aufnahmetrichter bedeutet hierbei nicht zwangsläufig, dass dieser eine im strengen Sinne kegelstumpfförmige Gestalt aufweist. Vielmehr kann der Aufnahmetrichter, insbesondere in Abhängigkeit von der Form des Schraubenkopfes, beispielsweise auch gestuft ausgebildet sein. In jedem Fall weist der Trichter einen dickeren zur Aufmahme des Kopfes und einen dünneren zur Aufnahme des Schaftes vorgesehenen Bereich auf.

Nach einer bevorzugten Ausgestaltung ist mittels des Vorschubelements das Sperrelement beziehungsweise die Sperrelemente direkt betätigbar. Die Verdrängung des Sperrelements aus dem Förderkanal beim Vorschub des zunächst im Aufnahmetrichter gehaltenen bolzenförmigen Elements geschieht damit nicht durch das bolzenförmige Element. Dieses Element, insbesondere dessen Gewinde im Fall einer Schraube, wird somit trotz hoher Taktrate schonend behandelt. Eine hohe Taktrate ist weiterhin dadurch begünstigt, dass die Vorrichtung nur eine geringe Anzahl bewegter Teile mit insgesamt, insbesondere im Vergleich zu einer Schraubenzuführvorrichtung mit Ladebuchse, geringen Massen hat.

Die Schussrichtung, in der das bolzenförmige Element in die Vorrichtung eingebracht wird, ist zumindest annähernd senkrecht zur Richtung, in der das Element vom Aufnahmetrichter aus weitergefördert wird. Zur Führung des bolzenförmigen Elements im Förderkanal ist bevorzugt eine T-Nut vorgesehen, in der der Kopf des Elements verschiebbar gehalten ist. Im Förderkanal werden typischerweise mehrere unmittelbar hintereinander liegende bolzenförmige Elemente geführt. Durch die Führung an deren Kopf werden die einzelnen Elemente zwangsläufig lagerichtig zur Verarbeitungseinheit transportiert.

Nachfolgend wird ein Ausführungsbeispiel der Erfindung anhand einer Zeichnung näher erläutert. Hierin zeigen:
- Fig. 1: schematisch eine Presse mit einem Setzkopf als Verarbeitungseinheit sowie eine Zuführvorrichtung für bolzenförmige Elemente, und
- Fig. 2a-c: in schematischen Ansichten die Zuführvorrichtung gemäß Fig. 1.

Einander entsprechende Teile sind in allen Figuren mit den gleichen Bezugszeichen versehen.

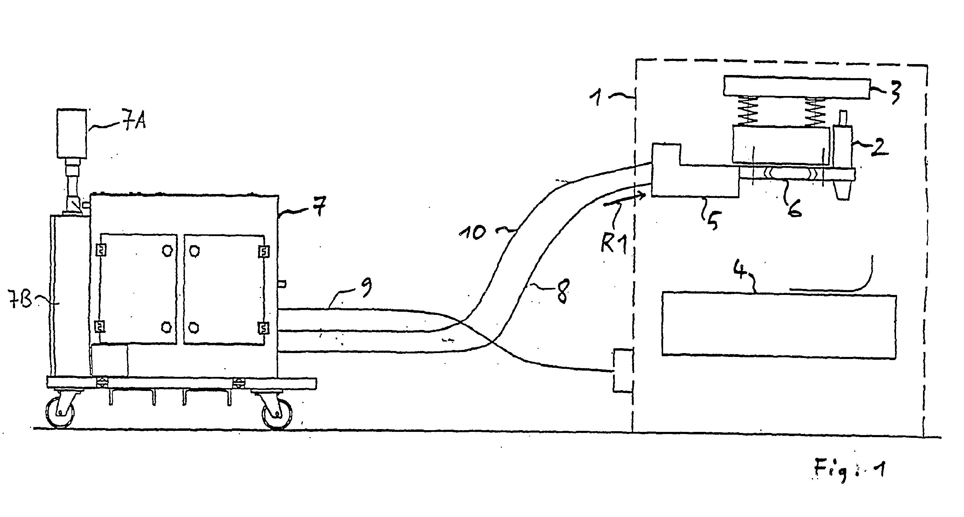

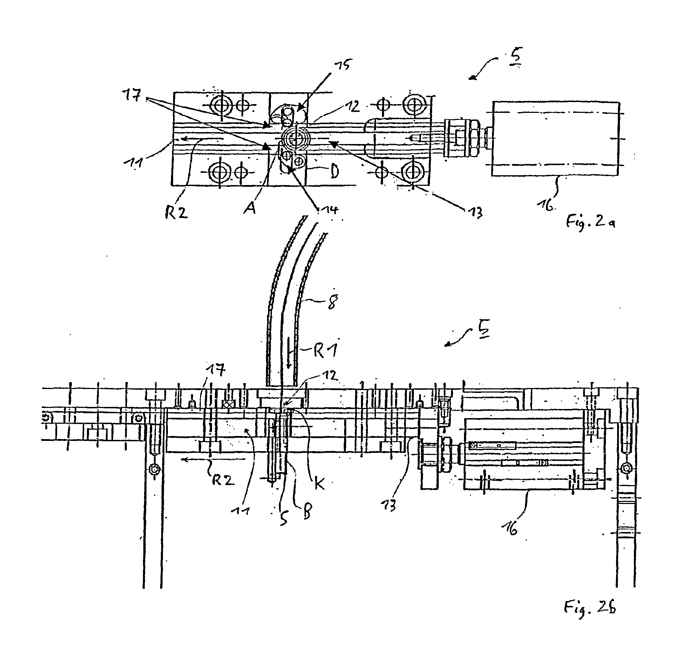

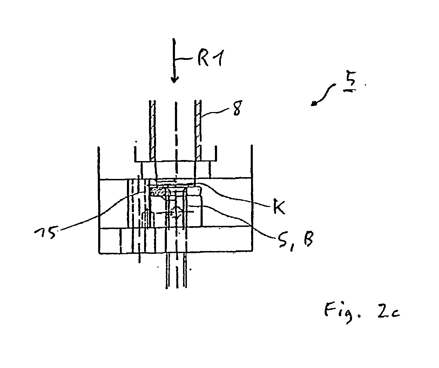

Fig. 1 zeigt als Verarbeitungsmaschine eine Presse 1 mit einem insbesondere als sogenanntes Setzmodul ausgebildeten Setzkopf 2 als Verarbeitungseinheit. Die Presse 1 weist ein Werkzeugoberteil 3 und ein Werkzeugunterteil 4 auf, an das als Vorrichtung zum Zuführen von (nicht dargestellten) bolzenförmigen Elementen mit einem Kopf, insbesondere Schrauben, eine Zuführvorrichtung 5 angeschlossen ist. Die Zuführvorrichtung 5 führt die bolzenförmigen Elemente dem Setzkopf 2 über ein variables Verbindungsmodul 6 zu. Das Verbindungsmodul 6 ist hierzu aus einzelnen, modularen Teilstrecken gebildet, so dass in einfacher Weise unterschiedliche Längen einstellbar sind, um die Verwendung der Zuführvorrichtung 5 in unterschiedlichen Bearbeitungsmaschinen in einfacher Weise zu ermöglichen. Die Zuführvorrichtung 5 umfasst einen Förderkanal 11 (vgl. Fig. 2a bis 2c), zur Förderung der Schrauben zum Setzkopf 2. Im Betrieb liegen in diesem auch als Förder- oder Sammelstrecke bezeichneten Förderkanal 11 die bolzenförmigen Elemente unmittelbar aneinander gereiht in definierter Orientierung und werden getaktet durch die Zuführvorrichtung 5 zum Setzkopf 2 vorgeschoben.

Die bolzenförmigen Elemente werden pneumatisch in die Zuführvorrichtung 5 in Schussrichtung R1 aus einem Sortier- und Zuführgerät 7 über einen an der Zuführvorrichtung 5 angeschlossenen Zuführschlauch 8 eingeschossen. Anstelle eines Schlauches kann auch ein starrer Zuführkanal vorgesehen sein. Das Sortier- und Zuführgerät 7, das beispielsweise einen Vibrationsförderer umfasst, und die Presse 1 sind darüber hinaus über eine Signalleitung 9 und eine Stanzkopfsteuerleitung 10 miteinander verbunden. Dem Zuführgerät 7 ist neben einer Bedieneinheit 7A eine Steuereinheit 7B zugeordnet, die zur Steuerung des Betriebsprozesses und insbesondere der Synchronisation zwischen Sortier- und Zuführgerät 7, Zuführvorrichtung 5 und Taktung der Presse 1 dient.

Die Fig. 2a bis 2c zeigen die Zuführvorrichtung 5, der eine Anzahl einen Kopf K und einen Schaft B aufweisende Schrauben S als bolzenförmige Elemente sukzessive mit dem Schaft B voran über den Zuführschlauch 8 zugeführt werden. In der Schnittdarstellung nach Figur 2a ist die Schussrichtung R1 senkrecht zur dargestellten Ebene. Die Schraube S wird einem in einem Förderkanal 11 angeordneten sich in Schussrichtung R1 verjüngenden Aufnahmetrichter 12 zugeführt, welcher aus einem Vorschubelemet 13 einerseits und zwei Sperrelementen 14, 15 andererseits gebildet ist. Das Vorschubelement 13 ist betätigbar mittels eines Hubzylinders 16 und damit in einer senkrecht zur Schussrichtung R1 stehenden Querrichtung R2 weiter förderbar, wobei der Kopf K der Schraube S in einer T-Nut 17 im als Förderschiene ausgebildeten Förderkanal 11 geführt ist.

Der Aufnahmetrichter 12 ist annähernd zur Hälfte vom Vorschubelement 13 und zu jeweils einem Viertel durch die Sperrelemente 14, 15 gebildet. In Figur 2a ist das in der Darstellung unten angeordnete Sperrelement 14 in geschlossener Position und das in der Darstellung oben angeordnete Sperrelement 15 in offener Position eingezeichnet. Beim tatsächlichen Betrieb der Zuführvorrichtung 5 sind stets entweder beide Sperrelemente 14, 15 geschlossen, womit der Aufnahmetrichter 12 geschlossen ist, oder beide Sperrelemente 14, 15 geöffnet. Beim Einschießen einer Schraube S in die Zuführvorrichtung 5 ist der Aufnahmetrichter 12 zunächst geschlossen. Die Schraube S wird mit deren Kopf K im Aufnahmetrichter 12 gestoppt.

Anschließend verfährt das Vorschubelement 13, bezogen auf die Anordnung nach Fig. 2a, nach links. Hierbei werden die auch als Klinken bezeichneten Sperrelemente 14, 15 unmittelbar durch das Vorschubelement 13 betätigt, d.h. geöffnet, so dass die Schraube S im Förderkanal 11 verschoben werden kann. Die Sperrelemente 14, 15 sind jeweils um eine Drehachse D schwenkbar, welche außerhalb des Förderkanals 11 und, bezogen auf die Querrichtung R2, hinter der Achse A des Aufnahmetrichters 12 angeordnet ist. Durch diese Anordnung der Drehachsen D relativ zum Aufnahmetrichter 12 ist ein leichtes und gleichzeitig schnelles Öffnen der Sperrelemente 14, 15 durch das mit diesen beim Vorschub in unmittelbarem Kontakt befindliche Vorschubelement 13 möglich. Zwischen der Schraube S und den Sperrelementen 14, 15 wird beim Vorschub keine Kraft ausgeübt. Beim anschließenden Zurückfahren des Vorschubelements 13 werden die Sperrelemente 14, 15 durch Federkraft wieder aufeinander zu bewegt, so dass der Aufnahmetrichter 12 wieder geschlossen wird. Zur Weiterförderung der Schraube S in der Zuführvorrichtung 5 ist somit lediglich ein einziges aktiv bewegliches Element, nämlich das direkt mittels des Hubzylinders 16 linear angetriebene Vorschubelement 13 erforderlich. Die Zuführvorrichtung 5 ist damit insgesamt trotz hoher erreichbarer Taktrate konstruktiv einfach sowie kompakt aufgebaut.

### Bezugszeichenliste

- 1: Presse, Verarbeitungsmaschine
- 2: Stanzkopf, Verarbeitungseinheit
- 3: Werkzeugoberteil
- 4: Werkzeugunterteil
- 5: Zuführvorrichtung
- 6: Verbindungsmodul
- 7: Sortier- und Zuführgerät
- 7A: Bedieneinheit
- 7B: Steuereinheit
- 8: Zuführschlauch
- 9: Signalleitung
- 10: Stanzkopfsteuerleitung
- 11: Förderkanal
- 12: Aufnahmetrichter
- 13: Vorschubelement
- 14: Sperrelement
- 15: Sperrelement
- 16: Hubzylinder
- 17: T-Nut
- K: Kopf
- R1: Schussrichtung
- R2: Querrichtung
- S: Schraube, bolzenförmiges Element
- B: Schaft
- A: Achse
- D: Drehachse

## Patentansprüche

1. Vorrichtung zum Zuführen eines bolzenförmigen Elements (S) mit einem Kopf (K) und einem Schaft (B) zu einer Verarbeitungseinheit (2), insbesondere zum Zuführen einer Schraube (S) zu einem Setzkopf (2) einer Presse (1), wobei das bolzenförmige Element (S) entlang einer Schussrichtung (R1) der Vorrichtung zuführbar ist und diese einen Förderkanal (11) aufweist, der zur Aufreihung mehrerer bolzenförmiger Elemente (S) und deren Weiterförderung zur Verarbeitungseinheit (2) vorgesehen ist,
**dadurch gekennzeichnet,**
**dass** ein sich in Schussrichtung (R1) verjüngender Aufnahmetrichter (12) vorgesehen ist, welcher zur Aufnahme des bolzenförmigen Elements (S) mit dem Schaft (B) voran vorgesehen ist und mehrere Trichtersegmente (13,14,15) aufweist, von welchen eines von einem zur linearen Förderung des bolzenförmigen Befestigungselements (S) verschiebbaren Vorschubelement (13) und ein weiteres von einem in den Förderkanal (11) eingreifenden Sperrelement (14,15) gebildet ist.

2. Vorrichtung nach Anspruch 1,
**dadurch gekennzeichnet,**
**dass** das Vorschubelement (13) zur direkten Betätigung des Sperrelements (14,15) vorgesehen ist.

3. Vorrichtung nach Anspruch 1 oder 2,
**dadurch gekennzeichnet,**
**dass** das vom Vorschubelement (13) gebildete Trichtersegment zumindest annähernd eine Hälfte des Aufnahmetrichters (12) bildet .

4. Vorrichtung nach einem der Ansprüche 1 bis 3,
**dadurch gekennzeichnet,**
**dass** zwei Sperrelemente (14,15) jeweils zumindest annähernd ein Viertel des Aufnahmetrichters (12) bilden.

5. Vorrichtung nach einem der Ansprüche 1 bis 3,
**dadurch gekennzeichnet,**
**dass** das Sperrelement (13,14) durch Federkraft im Förderkanal (11) gehalten wird.

6. Vorrichtung nach einem der Ansprüche 1 bis 4,
**gekennzeichnet durch**
einen zur linearen Betätigung des Vorschubelements (13) vorgesehenen Hubzylinder (16).

7. Vorrichtung nach einem der Ansprüche 1 bis 9,
**dadurch gekennzeichnet,**
**dass** der Förderkanal (11) eine T-Nut (17) zur Führung des Kopfes (K) des bolzenförmigen Elements (S) aufweist.

8. Verfahren zum Zuführen eines bolzenförmigen Elements (S) mit einem Kopf (K) und einem Schaft (B) zu einer Bearbeitungseinheit (2), insbesondere zum Zuführen einer Schraube (S) zu einem Setzkopf (2) einer Presse (1), bei dem mehrere bolzenförmige Elemente (S) in einem Förderkanal (11) aufgereiht und zur Verarbeitungseinheit (2) weitergefördert werden,
**dadurch gekennzeichnet,**
**dass** das bolzenförmige Element (S) von einem Zuführgerät (7) mit dem Schaft (B) voraus unmittelbar in den Förderkanal (11) eingeschossen wird.

## Claims

1. Device for feeding a bolt-shaped element (S) with a head (K) and a stem (B) to a processing unit (2), in particular for feeding a screw (S) to a swage-head (2) of a press (1), the bolt-shaped element (S) being feedable along a shooting direction (R1) of the device and the latter having a conveying duct (11) which is provided for arranging a plurality of bolt-shaped elements (S) in a row and for their further conveying to the processing unit (2), **characterized in that** a receiving hopper (12) is provided which tapers in the shooting direction (R1) and is provided for receiving the bolt-shaped element (S) with the stem (B) in front and has a plurality of hopper segments (13, 14, 15) of which one is formed by an advancing element (13), which can be displaced for the linear conveying of the bolt-shaped fastening element (S), and a further one is formed by a blocking element (14, 15) engaging in the conveying duct (11).

2. Device according to Claim 1, **characterized in that** the advancing element (13) is provided for the direct actuation of the blocking element (14, 15).

3. Device according to Claim 1 or 2, **characterized in that** the hopper segment formed by the advancing element (13) at least approximately forms half of the receiving hopper (12).

4. Device according to one of Claims 1 to 3, **characterized in that** two blocking elements (14, 15) in each case at least approximately form a quarter of the receiving hopper (12).

5. Device according to one of Claims 1 to 3, **characterized in that** the blocking element (13, 14) is held in the conveying duct (11) by spring force.

6. Device according to one of Claims 1 to 4, **characterized by** a lifting cylinder (16) provided for the linear actuation of the advancing element (13).

7. Device according to one of Claims 1 to 9, **characterized in that** the conveying duct (11) has a T-groove (17) for guiding the head (K) of the bolt-shaped element (S).

8. Method for feeding a bolt-shaped element (S) with a head (K) and a stem (B) to a machining unit (2), in particular for feeding a screw (S) to a swage-head (2) of a press (1), in which method a plurality of bolt-shaped elements (S) are arranged in a row in a conveying duct (11) and are conveyed further to the processing unit (2), **characterized in that** the bolt-shaped element (S) is shot, with the stem (B) in front, directly into the conveying duct (11) by a feeding apparatus (7).

## Revendications

1. Dispositif pour amener ou acheminer un élément (S) en forme de broche ou de tourillon avec une tête (K) et une tige (B) à une unité de traitement (2), notamment pour acheminer une vis (S) à une tête de pose (2) d'une presse (1), l'élément (S) en forme de broche pouvant être acheminé le long d'une direction de tir d'insertion (R1) du dispositif et celui-ci présentant un canal de transport (11) qui est prévu pour ranger en ligne plusieurs éléments (S) en forme de broche et pour la poursuite de leur transport vers l'unité de traitement (2), **caractérisé en ce qu'**il est prévu une trémie de réception (12) se rétrécissant dans la direction de tir d'insertion (R1), qui est conçue pour recevoir l'élément (S) en forme de broche avec la tige (B) en avant, et présente plusieurs segments de trémie (13, 14, 15) dont l'un est formé par un élément d'avance (13) pouvant coulisser en vue du transport linéaire de l'élément de fixation (S) en forme de broche, et un autre est formé par un élément de blocage (14, 15) s'engageant dans le canal de transport (11).

2. Dispositif selon la revendication 1, **caractérisé en ce que** l'élément d'avance (13) est prévu pour l'actionnement direct de l'élément de blocage (14, 15).

3. Dispositif selon la revendication 1 ou 2, **caractérisé en ce que** le segment de trémie formé par l'élément d'avance (13) forme au moins approximativement une moitié de la trémie de réception (12).

4. Dispositif selon l'une des revendications 1 à 3, **caractérisé en ce que** deux éléments de blocage (14, 15) forment chacun au moins approximativement un quart de la trémie de réception (12).

5. Dispositif selon l'une des revendications 1 à 3, **caractérisé en ce que** l'élément de blocage (14, 15) est maintenu dans le canal de transport (11) par une force de ressort.

6. Dispositif selon l'une des revendications 1 à 4, **caractérisé par** un vérin (16) prévu pour l'actionnement linéaire de l'élément d'avance (13).

7. Dispositif selon l'une des revendications 1 à 6, **caractérisé en ce que** le canal de transport (11) présente une rainure en T (17) pour guider la tête (K) de l'élément (S) en forme de broche.

8. Procédé pour amener ou acheminer un élément (S) en forme de broche ou de tourillon avec une tête (K) et une tige (B) à une unité de traitement (2), notamment pour acheminer une vis (S) à une tête de pose (2) d'une presse (1), d'après lequel plusieurs éléments (S) en forme de broche sont rangés en ligne dans un canal de transport (11) et continuent à être transportés vers l'unité de traitement (2), **caractérisé en ce que** l'élément (S) en forme de broche est introduit par un tir d'insertion, au moyen d'un appareil d'alimentation (7), avec la tige (B) en avant, directement dans le canal de transport (11).
